# EUROPEAN PATENT APPLICATION

(11) **EP 4 578 531 A1**
(43) Date of publication of application: **02.07.2025**
(21) Application number: 22956499.2
(22) Date of filing: 25.08.2022
(51) Int. Cl.: B01D 53/06, B01D 53/04, B01J 19/00, B65G 67/02, C01B 32/50

(54) **CARBON DIOXIDE RECOVERY METHOD AND CARBON DIOXIDE RECOVERY SYSTEM**

(71) Applicant: MITSUBISHI ELECTRIC CORPORATION, Chiyoda-ku Tokyo 100-8310 (JP)
(72) Inventor: TANISHIMA, Makoto, Tokyo 100-8310 (JP); INOUE, Takumi, Tokyo 100-8310 (JP); FUKUI, Tomoya, Tokyo 100-8310 (JP); FUJINO, Jun, Tokyo 100-8310 (JP); ONAKA, Yoji, Tokyo 100-8310 (JP); SHINOKI, Toshio, Tokyo 100-8310 (JP); KAWAMOTO, Makoto, Tokyo 100-8310 (JP)
(74) Representative: Meissner Bolte Partnerschaft mbB
(86) International application number: PCT/JP2022/032029
(87) International publication number: WO 2024/042672

(57) **Abstract**

A carbon dioxide recovery method includes an adsorbing step of adsorbing carbon dioxide onto an adsorbent at a first location by using an air flow generated by a blower provided in a fluid device or an external air; a first transporting step of transporting the adsorbent which has adsorbed the carbon dioxide from the first location to a second location by a mobile object; and a second transporting step of transporting an adsorbent which has not adsorbed the carbon dioxide from the second location to the first location by a mobile object.

## Description

### Technical Field

The present invention relates to a carbon dioxide recovery method and a carbon dioxide recovery system.

### Background Art

Patent Document 1 discloses a device that uses an adsorbent capable of adsorbing carbon dioxide in a reaction vessel to recover carbon dioxide from a processed gas. In Patent Document 1, the adsorbent that adsorbs carbon dioxide is transported through a pipe connected to the reaction vessel.

### Citation List

### Patent Documents

| | |
|---|---|
| Patent Document 1: | Japanese Unexamined Patent Application, First Publication JP 2012- 71 246 A |

### Summary of Invention

### Problem to be Solved by the Invention

In the configuration of Patent Document 1, since the adsorbent is transported by a pipe, a space for disposing the pipe is required, and an installation location of a device is restricted.

The present invention has been made in order to solve the above-described problems, and an object of the present invention is to provide a carbon dioxide recovery method and a carbon dioxide recovery system with fewer space constraints.

### Means to Solve the Problem

The carbon dioxide recovery method according to the present invention includes an adsorbing step of adsorbing carbon dioxide onto an adsorbent at a first location by using an air flow generated by a blower provided in a fluid device or an external air; a first transporting step of transporting the adsorbent which has adsorbed the carbon dioxide from the first location to a second location by a mobile object; and a second transporting step of transporting an adsorbent which has not adsorbed the carbon dioxide from the second location to the first location by a mobile object.

The carbon dioxide recovery system according to the present invention includes an adsorbent that is configured to adsorb carbon dioxide; a holding unit that is disposed at a position where an air flow generated by a blower of a fluid device or an external air reaches and that is configured to accommodate the adsorbent therein; a separation device that is configured to separate the carbon dioxide from the adsorbent which has adsorbed the carbon dioxide; and a mobile object that is configured to transport the adsorbent in at least a part of a section of a path from the holding unit to the separation device.

### Effects of the Invention

According to the present invention, it is possible to provide a carbon dioxide recovery method and a carbon dioxide recovery system with fewer space constraints.

### Brief Description of Drawings

- FIG. 1: A block diagram showing a configuration of a carbon dioxide recovery system of Embodiment 1.
- FIG. 2: A schematic view showing configurations of a fluid device and a carbon dioxide recovery device of Embodiment 1.
- FIG. 3: A block diagram showing the configuration of a carbon dioxide recovery system of Embodiment 2.
- FIG. 4: A block diagram showing the configuration of a carbon dioxide recovery system of Embodiment 3.
- FIG. 5: A schematic view showing the configuration of a fluid device according to a modification example.

### Description of Embodiments

### Embodiment 1

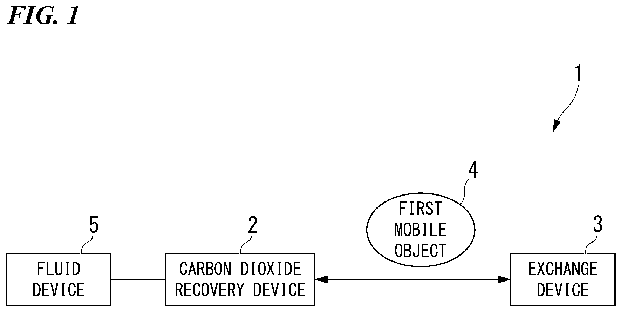

FIG. 1 is a block diagram of a carbon dioxide recovery system 1 according to Embodiment 1. As shown in FIG. 1, the carbon dioxide recovery system 1 includes a carbon dioxide recovery device 2, an exchange device 3, a first mobile object 4, and a fluid device 5.

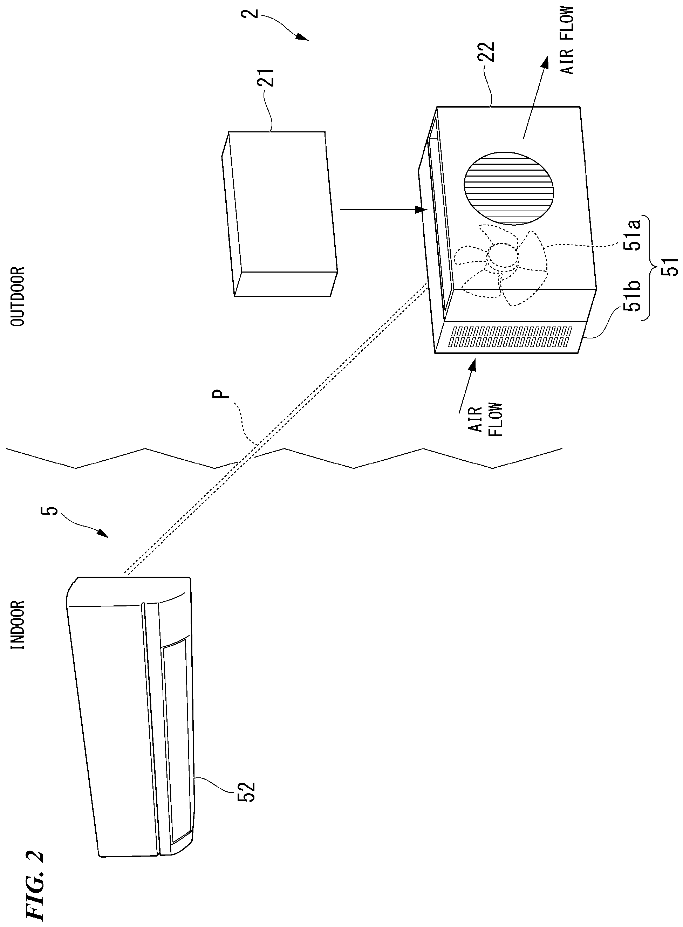

FIG. 2 is a schematic view showing configurations of the fluid device 5 and the carbon dioxide recovery device 2. In the present embodiment, the fluid device 5 is an air conditioning system. As shown in FIG. 2, the fluid device 5 includes an outdoor unit 51 that is installed in an outdoor space of a building and an indoor unit 52 that is installed in an indoor space of the building. The outdoor unit 51 and the indoor unit 52 are connected by a pipe P or the like for circulating a refrigerant. The outdoor unit 51 includes a blower 51a (fan) and a casing 51b that stores the blower 51a. In addition, the outdoor unit 51 includes a compressor, a heat exchanger, and the like (not shown).

The carbon dioxide recovery device 2 includes an adsorbent 21 and a holding unit 22. The adsorbent 21 includes a material capable of adsorbing carbon dioxide. Examples of a material capable of adsorbing carbon dioxide include amine, zeolite, silica gel, diatomaceous earth, alumina, activated carbon, and the like. A plurality of materials may be selected and adopted from the above, or a material other than the above may be adopted.

The adsorbent 21 shown in FIG. 1 has a rectangular parallelepiped shape (block shape), but the shape of the adsorbent 21 can be appropriately changed. For example, the adsorbent 21 may be granular (for example, bead-like (spherical) or pellet-like (cylindrical)). Alternatively, a powdery adsorbent 21 may be adopted. In this case, the powdery adsorbent 21 may be supported on a surface of the base material. The base material may have, for example, a honeycomb shape.

As the adsorbent 21, a material in which the carbon dioxide is separated when the adsorbent 21 which has adsorbed the carbon dioxide is heated (for example, 50 °C to 120 °C), or a material in which the carbon dioxide is separated when the adsorbent 21 is placed under reduced pressure condition is preferable. The heating temperature is appropriately changed depending on the specific material of the adsorbent 21.

The holding unit 22 is a box-shaped container capable of accommodating the adsorbent 21 and has air permeability. The holding unit 22 can hold the adsorbent 21 at a position where the holding unit 22 receives the air flow generated by the blower 51a of the outdoor unit 51. In FIG. 2, in a flow direction of the air flow generated by the blower 51a, the holding unit 22 is disposed on a downstream side of the blower 51a. The holding unit 22 may be disposed on an upstream side of the blower 51a. In addition, the holding unit 22 may be disposed in contact with the casing 51b of the outdoor unit 51, or may be disposed spaced from the casing 51b.

In addition, the holding unit 22 has an opening to allow the adsorbent 21 to pass through. In FIG. 2, the opening faces upward, but the position of the opening can be changed. In addition, the holding unit 22 may have an openable and closable door instead of the opening. In this case, the door can be opened and closed to accommodate the adsorbent 21 in the holding unit 22 or to take out the adsorbent 21 from the holding unit 22.

A configuration for providing the holding unit 22 with air permeability can be appropriately changed, but, the entire holding unit 22 or a part of the holding unit 22 may be mesh-like, for example. For example, in a case where the adsorbent 21 is granular, a plurality of pores smaller than a particle diameter of the adsorbent 21 may be formed in the holding unit 22. A material of the holding unit 22 may be appropriately changed and may be metal or resin. A structure other than the above can also be adopted for the holding unit 22.

The holding unit 22 is configured to take in the air from the air flow generated by the blower 51a and the external air.

The carbon dioxide recovery device 2 adsorbs carbon dioxide onto the adsorbent 21 by bringing the air that has entered the inside of the holding unit 22 into contact with the adsorbent 21.

That is, the carbon dioxide recovery device 2 adsorbs carbon dioxide onto the adsorbent 21 by utilizing the air flow generated by the blower 51a provided in the fluid device 5 or the external air.

The exchange device 3 has a function of exchanging the adsorbent 21 which has adsorbed the carbon dioxide, which is taken out from the holding unit 22, with the adsorbent 21 which has not adsorbed the carbon dioxide. That is, the exchange device 3 has a function of receiving the adsorbent 21 which has adsorbed the carbon dioxide from a first mobile object 4 described below and storing the adsorbent 21 inside, and passing the adsorbent 21 which has not adsorbed the carbon dioxide, which is stored inside, to the first mobile object 4.

The exchange device 3 is disposed at a location (second location) spaced from a location (first location) where the carbon dioxide recovery device 2 is disposed. The exchange device 3 is provided on, for example, the roof of a building (for example, a house, a store, an office building, or an apartment). That is, the second location is, for example, a roof of a building. The exchange device 3 may be provided on, for example, an aircraft such as a balloon, an airship, an airplane, or the like. That is, the second location may be located in the air. In this case, by moving the aircraft above the first location, the second location may be located directly above the first location.

The first mobile object 4 has a function of transporting the adsorbent 21 between the location (first location) where the carbon dioxide recovery device 2 is disposed and the location (second location) where the exchange device 3 is disposed. The first mobile object 4 transports the adsorbent 21 which has adsorbed the carbon dioxide from the carbon dioxide recovery device 2 to the exchange device 3, and transports the adsorbent 21 which is different from the adsorbent 21 and has not adsorbed the carbon dioxide from the exchange device 3 to the carbon dioxide recovery device 2. The first mobile object 4 in Embodiment 1 is a flying object (for example, a drone or any robot capable of flying).

The first mobile object 4 may include a first mobile object 4 that performs only the transportation of the adsorbent 21 from the carbon dioxide recovery device 2 to the exchange device 3 and a first mobile object 4 that performs only the transportation of the adsorbent 21 from the exchange device 3 to the carbon dioxide recovery device 2.

In this case, either transportation may be performed before the other transportation, among the transportation of the adsorbent 21 from the carbon dioxide recovery device 2 to the exchange device 3 by one first mobile object 4 and the transportation of the adsorbent 21 from the exchange device 3 to the carbon dioxide recovery device 2 by the other first mobile object 4.

In addition, the adsorbent 21 may be transported from the carbon dioxide recovery device 2 to the exchange device 3 by one first mobile object 4 in parallel with the transportation of the adsorbent 21 from the exchange device 3 to the carbon dioxide recovery device 2 by the other first mobile object 4.

A carbon dioxide recovery method using the carbon dioxide recovery system 1 will be described. The carbon dioxide recovery method includes an adsorbing step, a first transporting step, and a second transporting step.

External air is blown onto the holding unit 22 of the carbon dioxide recovery device 2. In addition, when the blower 51a of the fluid device 5 is driven, an air flow of the air from the outdoor unit 51 of the fluid device 5 toward the holding unit 22 of the carbon dioxide recovery device 2 is generated. The external air and the air flow generated by the blower 51a reaches the holding unit 22 of the carbon dioxide recovery device 2 and comes into contact with the adsorbent 21 accommodated inside the holding unit 22. The adsorbent 21 in contact with the external air or the air flow adsorbs carbon dioxide from the air of the external air or the air of the air flow (adsorbing step).

As a result, carbon dioxide can be adsorbed and recovered by using the air flow generated by the blower 51a of the fluid device 5 or the external air. Therefore, carbon dioxide can be recovered with saved energy (less energy), improving the recovery efficiency of carbon dioxide.

The adsorbent 21 which has adsorbed the carbon dioxide in the adsorbing step is transported from the carbon dioxide recovery device 2 to the exchange device 3 by the first mobile object 4. That is, the adsorbent 21 which has adsorbed the carbon dioxide is transported from the first location to the second location by the first mobile object 4 (first transporting step).

The adsorbent 21, which has not adsorbed the carbon dioxide, stored in the exchange device 3 is transported from the exchange device 3 to the carbon dioxide recovery device 2 by the first mobile object 4. That is, the adsorbent 21 which has not adsorbed the carbon dioxide is transported from the second location to the first location by the first mobile object 4 (second transporting step).

The first mobile object 4 that transports the adsorbent 21 in the first transporting step and the first mobile object 4 that transports the adsorbent 21 in the second transporting step may be the same first mobile object 4 or different first mobile object 4.

In addition, either the first transporting step or the second transporting step may be performed first, or the first transporting step and the second transporting step may be performed in parallel.

As described above, the carbon dioxide recovery method according to the present embodiment includes an adsorbing step of adsorbing carbon dioxide onto an adsorbent 21 at a first location by using an air flow generated by a blower 51a provided in a fluid device 5 or an external air; a first transporting step of transporting the adsorbent 21 which has adsorbed the carbon dioxide from the first location to a second location by a first mobile object 4; and a second transporting step of transporting an adsorbent 21 which has not adsorbed the carbon dioxide from the second location to the first location by a first mobile object 4.

In this way, the adsorbent 21 is transported between the first location and the second location by the first mobile object 4, eliminating the need to dispose configurations such as pipes for transporting the adsorbent 21 between the first location and the second location, thereby providing a carbon dioxide recovery method with fewer space constraints.

In addition, in the carbon dioxide recovery method according to the present embodiment, in which the second location is located in air or on a roof of a building, and both the first mobile object 4 in the first transporting step and the first mobile object 4 in the second transporting step are flying objects.

Since the first mobile object 4 is a flying object, the adsorbent 21 can be easily transported between the first location and the second location or labor costs can be reduced, even when the first location and the second location are difficult for a person to access or difficult to dispose a pipe for transporting the adsorbent 21.

In addition, when the second location is located in the air, for example, by positioning the second location directly above the first location, the first mobile object 4, which is a flying object, can transport the adsorbent 21 in a short time. When the second location is the roof of a building, the first mobile object 4, which is a flying object, can be used to transport the adsorbent 21 more efficiently than transporting the adsorbent 21 through the inside of the building.

### Embodiment 2

Next, a carbon dioxide recovery method and a carbon dioxide recovery system 1A according to Embodiment 2 will be described.

Since the basic configuration of the carbon dioxide recovery system 1A according to the present embodiment is the same as the carbon dioxide recovery system 1 of Embodiment 1, the differences will be mainly described.

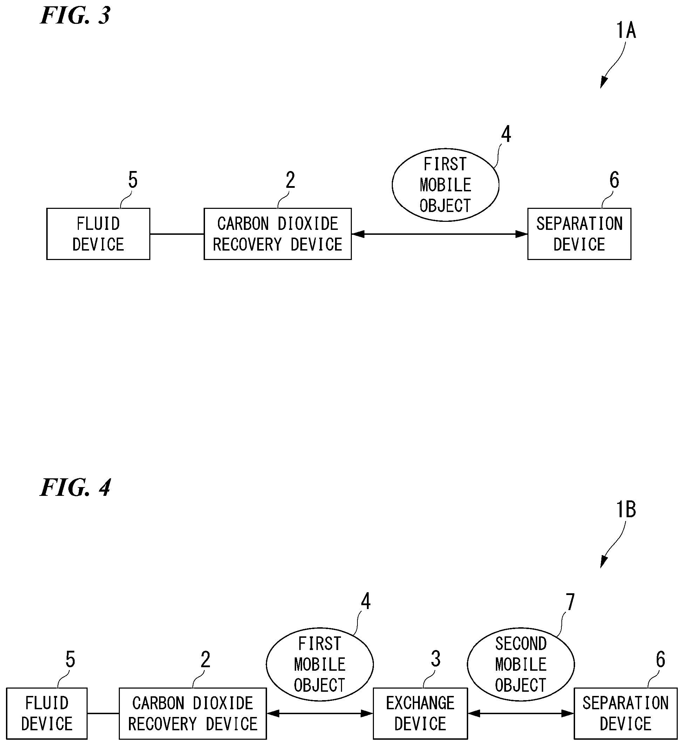

FIG. 3 is a block diagram of a carbon dioxide recovery system 1A according to Embodiment 2. As shown in FIG. 3, the carbon dioxide recovery system 1A includes a carbon dioxide recovery device 2, a first mobile object 4, a fluid device 5, and a separation device 6.

The carbon dioxide recovery system 1A according to Embodiment 2 includes a separation device 6 instead of the exchange device 3 provided in the carbon dioxide recovery system 1 according to Embodiment 1.

The separation device 6 has a function of separating carbon dioxide from the adsorbent 21 which has adsorbed the carbon dioxide. The separation device 6 may be provided with a heater, and the carbon dioxide may be separated by heating the adsorbent (for example, heating to 60 °C to 120 °C). The heating temperature may be appropriately changed depending on the specific material of the adsorbent 21. Alternatively, the separation device 6 may include a vacuum pump, and the carbon dioxide may be separated by placing the adsorbent under reduced pressure condition.

The separation device 6 is disposed at a location (second location) spaced from a location (first location) where the carbon dioxide recovery device 2 is disposed. The separation device 6 is provided, for example, on the roof of a building. That is, the second location is, for example, a roof of a building. The separation device 6 may be provided in, for example, an aircraft such as a balloon, an airship, or an airplane. That is, the second location may be located in the air.

The carbon dioxide separated from the adsorbent 21 by the separation device 6 may be stored in, for example, a storage container such as a gas cylinder, and may be transported to another location for use.

The first mobile object 4 has a function of transporting the adsorbent 21 between the first location and the second location. The first mobile object 4 transports the adsorbent 21 which has adsorbed the carbon dioxide from the carbon dioxide recovery device 2 to the separation device 6, and transports the adsorbent 21 which is different from the adsorbent 21 and has not adsorbed the carbon dioxide (adsorbent 21 from which the carbon dioxide has been separated by the separation device 6) from the separation device 6 to the carbon dioxide recovery device 2.

The first mobile object 4 may transport the adsorbent 21 which has adsorbed the carbon dioxide from the carbon dioxide recovery device 2 to the separation device 6. After the separation device 6 separates the carbon dioxide from the adsorbent 21, the adsorbent 21 from which the carbon dioxide has been separated may be transported from the separation device 6 to the carbon dioxide recovery device 2.

In addition, the first mobile object 4 may include a first mobile object 4 that performs only the transportation of the adsorbent 21 from the carbon dioxide recovery device 2 to the separation device 6, and a first mobile object 4 that performs only the transportation of the adsorbent 21 from the separation device 6 to the carbon dioxide recovery device 2.

In this case, either transportation may be performed before the other transportation, among the transportation of the adsorbent 21 from the carbon dioxide recovery device 2 to the separation device 6 by one first mobile object 4 and the transportation of the adsorbent 21 from the separation device 6 to the carbon dioxide recovery device 2 by the other first mobile object 4.

In addition, the adsorbent 21 may be transported from the carbon dioxide recovery device 2 to the separation device 6 by one first mobile object 4 in parallel with the transportation of the adsorbent 21 from the separation device 6 to the carbon dioxide recovery device 2 by the other first mobile object 4.

Next, a carbon dioxide recovery method using the carbon dioxide recovery system 1A will be described. The carbon dioxide recovery method using the carbon dioxide recovery system 1A includes an adsorbing step, a first transporting step, a second transporting step, and a separation step.

In the adsorbing step, carbon dioxide is adsorbed onto the adsorbent 21 using an air flow generated by the blower 51a provided in the fluid device 5 or an external air.

In the first transporting step, the adsorbent 21 which has adsorbed the carbon dioxide in the adsorbing step is transported from the carbon dioxide recovery device 2 to the separation device 6 by the first mobile object 4.

The separation step is performed after the first transporting step. In the separation step, the separation device 6 separates the carbon dioxide from the adsorbent 21 which has adsorbed the carbon dioxide.

In the second transporting step, the adsorbent 21, from which the carbon dioxide has been separated by the separation device 6 (adsorbent 21 which has not adsorbed the carbon dioxide), is transported from the separation device 6 to the carbon dioxide recovery device 2 by the first mobile object 4.

As described above, the carbon dioxide recovery method according to the present embodiment further includes a separation step of separating the carbon dioxide from the adsorbent 21 which has adsorbed the carbon dioxide, after the first transporting step.

As a result, the carbon dioxide can be separated from the adsorbent 21 which has adsorbed the carbon dioxide at a location different from the first location. Therefore, the carbon dioxide can be separated from the adsorbent 21 which has adsorbed the carbon dioxide without enlarging the device disposed at the first location.

In addition, in the carbon dioxide recovery method according to the present embodiment, in the separation step, the carbon dioxide is separated from the adsorbent 21 which has adsorbed the carbon dioxide at the second location.

As a result, at the second location different from the first location, the carbon dioxide can be separated from the adsorbent 21 which has adsorbed the carbon dioxide. Therefore, the separation step can be performed at the second location where space constraints are less than at the first location. Consequently, the separation step can be carried out using, for example, a large and highly efficient separation device, thereby improving the recovery efficiency of carbon dioxide.

In addition, the carbon dioxide recovery system 1A according to the present embodiment includes an adsorbent 21 that is configured to adsorb carbon dioxide; a holding unit 22 that is disposed at a position where an air flow generated by a blower 51a of a fluid device 5 or an external air reaches and that is configured to accommodate the adsorbent 21 therein; a separation device 6 that is configured to separate the carbon dioxide from the adsorbent 21 which has adsorbed the carbon dioxide; and a first mobile object 4 that is configured to transport the adsorbent 21 in at least a part of a section of a path from the holding unit 22 to the separation device 6.

The first mobile object 4 transports the adsorbent 21 in at least a part of the section of the path from the holding unit 22 to the separation device 6, whereby it is not necessary to dispose of a configuration such as a pipe for transporting the adsorbent 21 in this section, and a carbon dioxide recovery system with fewer space constraints can be provided.

### Embodiment 3

Next, a carbon dioxide recovery method and a carbon dioxide recovery system 1B according to Embodiment 3 will be described.

Since the basic configuration of the carbon dioxide recovery system 1B according to the present embodiment is the same as the carbon dioxide recovery system 1 according to Embodiment 1 or the carbon dioxide recovery system 1A according to Embodiment 2, the carbon dioxide recovery system 1B according to the embodiment will be described focusing on the differences.

FIG. 4 is a block diagram of the carbon dioxide recovery system 1B according to Embodiment 3. As shown in FIG. 4, the carbon dioxide recovery system 1B includes a carbon dioxide recovery device 2, an exchange device 3, a first mobile object 4, a fluid device 5, a separation device 6, and a second mobile object 7.

The separation device 6 according to the present embodiment is disposed at a third location different from the first location where the carbon dioxide recovery device 2 is disposed and the second location where the exchange device 3 is disposed. The third location is, for example, a factory site.

The second mobile object 7 has a function of transporting the adsorbent 21 between the second location where the exchange device 3 is disposed and the third location where the separation device 6 is disposed.

The second mobile object 7 transports the adsorbent 21 which has adsorbed the carbon dioxide from the exchange device 3 to the separation device 6, and transports the adsorbent 21 which is different from the adsorbent 21 and has not adsorbed the carbon dioxide from the separation device 6 to the exchange device 3. The second mobile object 7 in Embodiment 3 is a flying object (for example, an aircraft such as a balloon, an airship, or an airplane) larger than the first mobile object 4.

Since the second mobile object 7 is the flying object larger than the first mobile object 4, it can transport a greater amount of the adsorbent 21 collectively compared to the first mobile object 4. In addition, since the second mobile object 7 is a large flying object, the second mobile object 7 can move a long distance with less energy than the first mobile object 4. For example, the exchange device 3 receives and stores the adsorbent 21 from the first mobile object 4, and the second mobile object 7 collectively transports the adsorbent 21 stored in the exchange device 3, thereby enabling efficient transportation of the adsorbent 21.

The second mobile object 7 may include a second mobile object 7 that performs only the transportation of the adsorbent 21 from the exchange device 3 to the separation device 6, and a second mobile object 7 that performs only the transportation of the adsorbent 21 from the separation device 6 to the exchange device 3.

In this case, either transportation may be performed before the other transportation, among the transportation of the adsorbent 21 from the exchange device 3 to the separation device 6 by one second mobile object 7 and the transportation of the adsorbent 21 from the separation device 6 to the exchange device 3 by the other second mobile object 7.

In addition, the adsorbent 21 may be transported from the exchange device 3 to the separation device 6 by one second mobile object 7 in parallel with the transportation of the adsorbent 21 from the separation device 6 to the exchange device 3 by the other second mobile object 7.

In the present embodiment, in a case where the exchange device 3 is disposed on the roof of a building, the second mobile object 7 can be landed on the roof, and the adsorbent 21 can be moved between the exchange device 3 and the second mobile object 7.

In addition, in a case in which the exchange device 3 is provided in an aircraft, such as a balloon, an airship, or an airplane, in the air (in a case in which the second location is located in the air), the aircraft in which the exchange device 3 is disposed may be used as the second mobile object 7 as it is.

Next, a carbon dioxide recovery method using the carbon dioxide recovery system 1B will be described. Since the carbon dioxide recovery method using the carbon dioxide recovery system 1B is the same as the carbon dioxide recovery method according to Embodiment 1A in terms of the basic steps, the differences will be mainly described.

The carbon dioxide recovery method using the carbon dioxide recovery system 1B further includes a third transporting step after the first transporting step and before the separation step, and further includes a fourth transporting step.

In the third transporting step, the adsorbent 21 which has adsorbed the carbon dioxide is transported by the second mobile object 7 from the second location where the exchange device 3 is disposed to the third location where the separation device 6 is disposed. That is, in the third transporting step, the adsorbent 21 which has adsorbed the carbon dioxide is transported from the second location to the third location.

In the fourth transporting step, the adsorbent 21 which has not adsorbed the carbon dioxide is transported from the third location to the second location by the second mobile object 7. That is, in the fourth transporting step, the adsorbent 21 which has not adsorbed the carbon dioxide is transported from the third location to the second location.

In this case, in the separation step, the carbon dioxide is separated from the adsorbent 21 which has adsorbed the carbon dioxide at the third location by the separation device 6.

The second mobile object 7 that transports the adsorbent 21 in the third transporting step and the second mobile object 7 that transports the adsorbent 21 in the fourth transporting step may be the same second mobile object 7 or different second mobile object 7.

In addition, either the third transporting step or the fourth transporting step may be performed first, or the third transporting step and the fourth transporting step may be performed in parallel.

As described above, the carbon dioxide recovery method according to the present embodiment further includes a third transporting step of transporting the adsorbent 21 which has adsorbed the carbon dioxide from the second location to a third location, after the first transporting step and before the separation step; and a fourth transporting step of transporting the adsorbent 21 which has not adsorbed the carbon dioxide from the third location to the second location, in which, in the separation step, the carbon dioxide is separated from the adsorbent 21 which has adsorbed the carbon dioxide at the third location.

As a result, the carbon dioxide can be separated from the adsorbent 21 which has adsorbed the carbon dioxide at the third location, which is different from the first location and the second location. Therefore, since the separation step can be performed at the third location, such as a factory, where space constraints are less than at the first location and the second location, the separation step can be performed using a larger and highly efficient separation device, thereby further improving the recovery efficiency of carbon dioxide.

However, the technical scope of the present invention is not limited to the above embodiments, and various modifications can be made without departing from the gist of the present invention.

For example, in Embodiments 1 to 3 described above, the first mobile object 4 may move on the ground instead of being a flying object (for example, a drone or any robot capable of flying). In this case, the first mobile object 4 is, for example, any robot capable of moving on the ground or a vehicle equipped with an arm capable of transporting the adsorbent 21. By using the first mobile object 4 that moves on the ground in this way, the adsorbent 21 can be reliably transported between the first location and the second location even in bad weather.

In addition, in this case, in Embodiments 1 and 3, the second location where the exchange device 3 is disposed may be located in the vehicle, and in Embodiment 2, the second location where the separation device 6 is disposed may be located in the vehicle.

In the carbon dioxide recovery method according to Embodiment 1, when such a feature is adopted, the adsorbent 21 can be reliably transported between the first location and the second location by using a mobile object that moves on the ground even in bad weather. In addition, since the second location is located in the vehicle, the second location can be moved to any location on the ground close to the first location by moving the vehicle and perform the transportation. As a result, an appropriate location based on the surrounding conditions can be set as the second location, and the adsorbent 21 can be transported between the first location and the second location.

In addition, in the carbon dioxide recovery method according to Embodiment 3, in a case where such a feature is adopted, the second mobile object 7 that transports the adsorbent 21 between the second location where the exchange device 3 is disposed and the third location where the separation device 6 is disposed may be a vehicle. By using the second mobile object 7, which is a vehicle, the adsorbent 21 can be reliably transported between the second location and the third location even in bad weather. In this case, the vehicle in which the exchange device 3 is disposed may be used as the second mobile object 7 as it is.

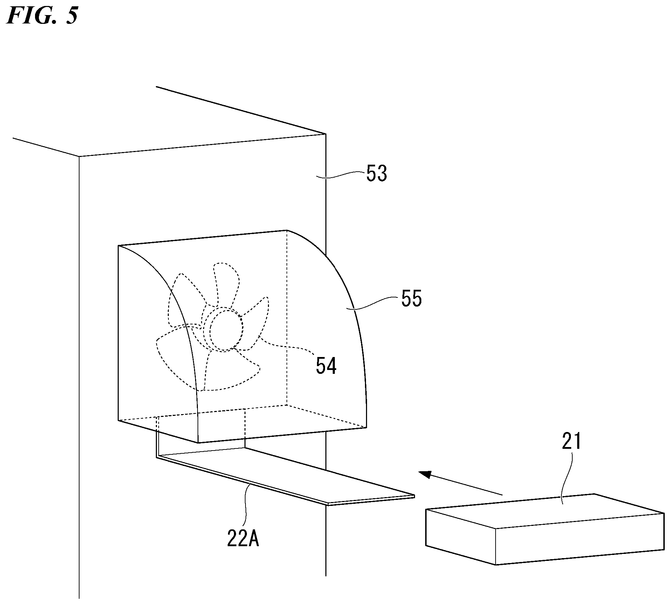

In addition, in Embodiments 1 to 3 described above, the carbon dioxide recovery systems 1, 1A, and 1B can adopt any device that generates an air flow as the fluid device 5. For example, as shown in FIG. 5, the carbon dioxide recovery systems 1, 1A, and 1B may include a ventilating fan 54 provided on an outer wall of a building 53 as a blower provided in the fluid device 5.

Further, a holding unit 22A may be provided on the lower part of a hood 55 that covers the ventilating fan 54 from an outside of the building 53. The holding unit 22A shown in FIG. 5 extends substantially horizontally from a wall surface of the building 53, and the adsorbent 21 can be held on the upper part of the holding unit 22A. An air flow suctioned into the building 53 by the ventilating fan 54 or an air flow discharged from the building 53 by the ventilating fan 54 passes through the lower part of the hood 55. Therefore, when the holding unit 22A holds the adsorbent 21, the air flow reaches the adsorbent 21.

In the carbon dioxide recovery method according to such an aspect, the blower provided in the fluid device is a blower (fan) 51a provided in the ventilating fan 54 or an outdoor unit 51 of the air conditioning system.

As a result, any building or the like in which the ventilating fan 54 or the fluid device 5 is installed can be set as the first location, thereby alleviating the restrictions on setting the first location and reducing space constraints.

In addition, the carbon dioxide recovery system 1 may not include the fluid device 5. In this case, the holding unit 22 of the carbon dioxide recovery device 2 need only be configured to take in external air, and the adsorbent 21 of the carbon dioxide recovery device 2 need only be configured to adsorb the carbon dioxide included in the external air.

In addition, in Embodiments 1 to 3 described above, the carbon dioxide recovery systems 1, 1A, and 1B may include a control unit (not shown), and the carbon dioxide recovery systems 1, 1A, and 1B may be configured such that one or a plurality of components of the carbon dioxide recovery systems 1, 1A, and 1B are controlled by the control unit.

A processor such as a central processing unit (CPU) can be used as the control unit. In addition, the control unit includes a computer system inside. A program for realizing the functions of each configuration of the above-described carbon dioxide recovery systems 1, 1A, and 1B may be recorded in a computer-readable recording medium, the program recorded in the recording medium may be read into a computer system, and the program may be executed to perform processing in the control unit. In addition, hardware other than the control unit may perform the above-described processing.

Here, the "the program recorded in the recording medium may be read into a computer system, and the program may be executed" includes installing the program in the computer system. Here, it is assumed that the term "computer system" described here includes an OS and hardware such as a peripheral device.

In addition, the "computer system" may include a plurality of computer devices connected via a network including a communication line such as the Internet or a WAN, a LAN, and a dedicated line. In addition, the "computer-readable recording medium" refers to a portable medium such as a flexible disk, a magneto-optical disk, a ROM, a CD-ROM, or the like and a storage device such as a hard disk or the like built in the computer system. As described above, the recording medium in which the program is stored may be a non-transitory recording medium such as a CD-ROM.

In addition, the recording medium also includes a recording medium provided internally or externally which is accessible from a distribution server for distributing the program. It should be noted that the program may be divided into a plurality of programs and may be downloaded at different timings and then combined by each configuration provided in the carbon dioxide recovery system 1, or a distribution server that distributes each divided program may be different.

Further, the "computer-readable recording medium" also includes a recording medium that holds the program for a certain period of time such as a volatile memory (RAM) inside the computer system such as a server or a client in a case in which a program is transmitted via a network. In addition, the program may be a program for realizing some of the functions described above. Further, the program may be a so-called difference file (difference program) capable of realizing the functions described above in combination with a program recorded in advance in the computer system.

In addition, the configurations or steps of the plurality of embodiments described above can be combined, or each component or each step can be modified or omitted as appropriate.

### List of Reference Signs

1, 1A, 1B Carbon dioxide recovery system
2 Carbon dioxide recovery device
3 Exchange device
4 First mobile object (mobile object)
5 Fluid device
6 Separation device
7 Second mobile object
21 Adsorbent
22 Holding unit
51 Outdoor unit
51a Blower (fan provided in outdoor unit)

## Claims

1. A carbon dioxide recovery method comprising:
- an adsorbing step of adsorbing carbon dioxide onto an adsorbent at a first location by using an air flow generated by a blower provided in a fluid device or an external air;
- a first transporting step of transporting the adsorbent which has adsorbed the carbon dioxide from the first location to a second location by a mobile object; and
- a second transporting step of transporting an adsorbent which has not adsorbed the carbon dioxide from the second location to the first location by a mobile object.

2. The carbon dioxide recovery method according to Claim 1,
wherein the second location is located in air or on a roof of a building, and both the mobile object in the first transporting step and the mobile object in the second transporting step are flying objects.

3. The carbon dioxide recovery method according to Claim 1,
wherein the second location is located in a vehicle, and
both the mobile object in the first transporting step and the mobile object in the second transporting step move on a ground.

4. The carbon dioxide recovery method according to any one of Claims 1 to 3,
wherein the blower provided in the fluid device is a fan provided in a ventilating fan or an outdoor unit of an air conditioning system.

5. The carbon dioxide recovery method according to any one of Claims 1 to 4, further comprising:
a separation step of separating the carbon dioxide from the adsorbent which has adsorbed the carbon dioxide, after the first transporting step.

6. The carbon dioxide recovery method according to Claim 5,
wherein, in the separation step, the carbon dioxide is separated from the adsorbent which has adsorbed the carbon dioxide at the second location.

7. The carbon dioxide recovery method according to Claim 5,
further comprising:
- a third transporting step of transporting the adsorbent which has adsorbed the carbon dioxide from the second location to a third location, after the first transporting step and before the separation step; and
- a fourth transporting step of transporting the adsorbent which has not adsorbed the carbon dioxide from the third location to the second location,
wherein, in the separation step, the carbon dioxide is separated from the adsorbent which has adsorbed the carbon dioxide at the third location.

8. A carbon dioxide recovery system comprising:
- an adsorbent that is configured to adsorb carbon dioxide;
- a holding unit that is disposed at a position where an air flow generated by a blower of a fluid device or an external air reaches and that is configured to accommodate the adsorbent therein;
- a separation device that is configured to separate the carbon dioxide from the adsorbent which has adsorbed the carbon dioxide; and
- a mobile object that is configured to transport the adsorbent in at least a part of a section of a path from the holding unit to the separation device.
